(19) Europäisches Patentamt / European Patent Office / Office européen des brevets

(11) **EP 4 397 780 A1**

(12) **EUROPEAN PATENT APPLICATION**
published in accordance with Art. 153(4) EPC

(43) Date of publication:
**10.07.2024  Bulletin 2024/28**

(21) Application number: **22864980.2**

(22) Date of filing: **29.08.2022**

(51) International Patent Classification (IPC):
**C22C 38/04** *(2006.01)*      **C22C 38/02** *(2006.01)*
**C22C 38/14** *(2006.01)*      **C22C 38/12** *(2006.01)*
**C21D 8/02** *(2006.01)*       **B21C 47/02** *(2006.01)*

(52) Cooperative Patent Classification (CPC):
**B21C 47/02; C21D 8/02; C22C 38/02; C22C 38/04;
C22C 38/12; C22C 38/14;** Y02T 30/00

(86) International application number:
**PCT/KR2022/012878**

(87) International publication number:
**WO 2023/033478 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021  KR 20210115367**

(71) Applicant: POSCO Co., Ltd
**Pohang-si, Gyeongsangbuk-do 37859 (KR)**

(72) Inventors:
• **YANG, Hong-Seok
  Pohang-si, Gyeongsangbuk-do 37877 (KR)**
• **KIM, Heung-Ju
  Pohang-si, Gyeongsangbuk-do 37877 (KR)**
• **KIM, Han-Sung
  Seoul 06194 (KR)**
• **LEE, Jeong-Uk
  Gwangyang-si, Jeollanam-do 57807 (KR)**
• **LA, Seung-Min
  Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **HOT-ROLLED STEEL SHEET FOR HYPER TUBE AND MANUFACTURING METHOD THEREFOR**

(57)    An aspect of the present invention may provide: a hot-rolled steel sheet that is excellent in terms of yield strength, vibration damping ratio, weldability, and weld site-low temperature toughness, and thus has physical properties suitable for application to a hyper tube; and a manufacturing method therefor.

[FIG.3]

20μm

EP 4 397 780 A1

**Description**

Technical Field

The present disclosure relates to a hot-rolled steel sheet and a manufacturing method therefor, and more particularly, to a hot-rolled steel sheet having excellent yield strength, vibration damping ratio, weldability, and low-temperature toughness in a weld zone, and thus having properties suitable for a tube for a hyperloop vacuum train, and a manufacturing method therefor.

Background Art

A hyperloop vacuum train, also known as a hyper tube train, is a system in which a maglev train moves in a tube in a vacuum state. The hyperloop vacuum train may operate at ultra-high speed because there is no friction with air or tracks, which is a main cause of energy loss during train operation. Since it has low energy loss and can save 93% of energy, as compared to an aircraft, the hyperloop vacuum trains are in the spotlight as an eco-friendly next-generation transportation means, and active research thereinto is being conducted around the world.

A structure and material of the hyperloop vacuum tube, used in the ultra-high speed hyperloop vacuum train affects system performance or costs. Currently, there are three major materials being studied as a tube material for the hyperloop vacuum trains, one of the materials being concrete. A concrete tube is advantageous in terms of costs, but it is difficult to connect individual tubes of about 10 m long to each other. In addition, when a vacuum is implemented, due to pores inside the concrete, there is a disadvantage in that external gas may be introduced into the tube, and a degree of vacuum may be easily broken. One of the other materials that has been studied in detail is a composite material such as carbon fiber, or the like. The composite material such as carbon fiber, or the like, is lightweight and has high performance, but a high cost thereof is considered to be the biggest disadvantage.

Currently, the most promising material for a tube of a hyperloop vacuum train is steel. Steel is a material that can be mass-produced at low cost. Steel has high rigidity and strength and is a material that is easy to process. In addition, steel is also a material that is easy to assemble or weld accessories between tubes or to tubes and also has an appropriate outgassing rate when maintaining a vacuum state. However, since the ultra-high-speed hyperloop vacuum train operates at a significantly faster speed than that of current high-speed trains, the safety of passengers and surrounding facilities should be considered as a top priority. Currently, safety standards for ultra-high-speed hyperloop vacuum trains have not been established, and the development of materials for tubes to ensure the safety of ultra-high-speed hyperloop vacuum trains is also insufficient.

Therefore, there is an urgent need to develop a material for a tube of a hyperloop vacuum train capable of ensuring safety while having processability and outgassing rate suitable for the tube of a hyperloop vacuum train.

(Patent Document 1) Korean Patent Registration No. 10-2106353 (published on 2020.05.04)

Summary of Invention

Technical Problem

According to an aspect of the present disclosure, a hot-rolled steel sheet having excellent yield strength, vibration damping ratio, weldability, and low-temperature toughness in a weld zone, and thus having properties suitable for a tube of a hyperloop vacuum train, and a manufacturing method therefor.

The subject of the present invention is not limited to the above. The subject of the present invention will be understood from the overall content of the present specification, and those of ordinary skill in the art to which the present invention pertains will have no difficulty in understanding the additional subject of the present invention.

Solution to Problem

According to an aspect of the present disclosure, a hot-rolled steel sheet for a tube of a hyperloop vacuum train includes, by weight: 0.03 to 0.11% of carbon (C); 1.0 to 2.0 of silicon (Si); 1.2 to 2.2% of manganese (Mn), and a balance of Fe and other unavoidable impurities, has a composite structure of ferrite and pearlite as a microstructure, wherein the following Relational Expressions 1 to 3 may be satisfied,

[Relational Expression 1]

$$355 \leq 11 + 394*D^{(-0.5)} + 448*[C] + 94*[Si] + 69*[Mn]$$

[Relational Expression 2]

$$100 \leq 186 - 240*D^{(-0.5)} - 121*[C] - 13.2*[Si] + 13.7*[Mn]$$

[Relational Expression 3]

$$27 \leq 476 - 95.22*\ln(D) - 220*[C] - 88*[Si]$$

In Relational Expressions 1 to 3, D refers to an average grain size ($\mu$m) of ferrite included in the hot-rolled steel sheet, and [C], [Si], and [Mn] refer to contents (weight%) of carbon (C), silicon (Si), and manganese (Mn) included in the hot-rolled steel sheet, respectively.

The microstructure of the hot-rolled steel sheet may be comprised of 60 to 95 area% of ferrite, 5 to 40 area% of pearlite and other unavoidable structures.

Total contents of titanium (Ti), niobium (Nb), and vanadium (V) inevitably included in the hot-rolled steel sheet may be less than 0.01% (including 0%).

The average particle size (D) of ferrite may be 10 to 20 $\mu$m.

A yield strength of the hot-rolled steel sheet may be 350 MPa or more, a Charpy impact energy of the hot-rolled steel sheet may be 27 J or more, based on -20°C, and a vibration damping ratio measured for a frequency of 1650 Hz in a flexural vibration mode, after processing the hot-rolled steel sheet into a specimen having a length*width*thickness of 80mm *20mm *2 mm may be $100*10^{-6}$ or more.

In a weld zone formed by welding the hot-rolled steel sheet by submerged arc welding, a Charpy impact energy in the weld zone may be 27 J or more, based on -20°C, and a fraction of an M-A phase included in the weld zone may be 5 area% or less (including 0%).

A thickness of the hot rolled steel sheet may be 10 mm or more.

According to an aspect of the present disclosure, a method of manufacturing a hot-rolled steel sheet for a tube of a hyperloop vacuum train may include operations of: heating a slab including, by weight, 0.03 to 0.11% of carbon (C); 1.0 to 2.0 of silicon (Si); 1.2 to 2.2% of manganese (Mn), and a balance of Fe and other unavoidable impurities, at a heating temperature ($T_1$) of 1100°C to 1300°C; hot rolling the heated slab at a finishing hot rolling temperature ($T_2$) of 900°C to 1000°C to provide a hot-rolled steel sheet; and coiling the hot-rolled steel sheet at a coiling temperature ($T_3$) of 600°C to 700°C, wherein the finishing hot rolling temperature ($T_2$), and the coiling temperature ($T_3$) may satisfy the following Relational Expression 4.

$$10 \leq -101.9 + 0.103*[T_2] + 0.0339*[T_3] - 61.9*[C] - 109.2*[Nb] \leq 20 \qquad \text{[Relational Expression 4]}$$

In Relational Expression 4, [$T_1$], [$T_2$] and [$T_3$] refer to a slab heating temperature ($T_1$,°C), a finishing hot rolling temperature ($T_2$,°C) and a coiling temperature ($T_3$,°C), respectively, and [C] and [Nb] refer to contents (weight %) of carbon (C) and niobium (Nb) included in the hot-rolled steel sheet, respectively.

Total contents of titanium (Ti), niobium (Nb), and vanadium (V) inevitably included in the slab may be less than 0.01% (including 0%).

The means for solving the above problems do not enumerate all the features of the present invention, and the various features of the present invention and the advantages and effects thereof will be understood in more detail with reference to the specific embodiments and examples below.

Advantageous Effects of Invention

As set forth above, according to an aspect of the present disclosure, a hot-rolled steel sheet having excellent yield strength, vibration damping ratio, weldability, and low-temperature toughness in a weld zone, and thus having physical properties suitable for a tube of a hyperloop vacuum train and a method for manufacturing the same may be provided.

The effect of the present invention is not limited to the above, and may be interpreted to include matters that can be reasonably inferred from the matters described in this specification by those skilled in the art.

Brief description of drawings

FIG. 1 is a microscope image obtained by observing a weld zone formed by welding a base material including 1.5 weight% of silicon (Si) using a welding material not containing silicon (Si).
FIG. 2 is a microscope image obtained by observing a weld zone formed by welding a base material including 2.0 weight% of silicon (Si) using a welding material containing silicon (Si).

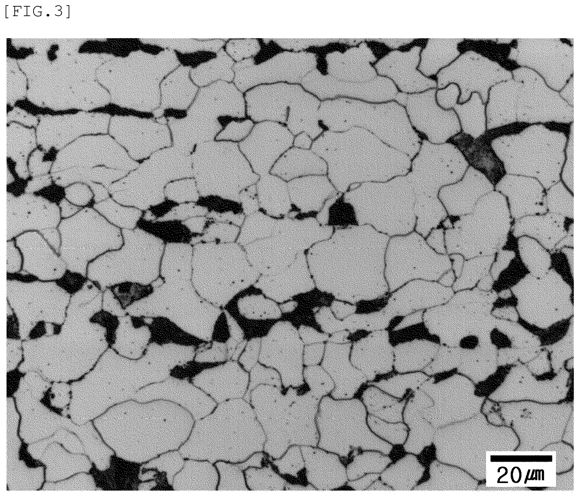

FIG. 3 is an optical microscope image used to observe a microstructure of specimen 1.
FIG. 4 is an optical microscope image of EN-S355, a conventional structural steel material.

Best Mode for Invention

The present disclosure relates to a hot-rolled steel sheet for a tube of a hyperloop vacuum train and a manufacturing method therefor. Hereinafter, preferred embodiments of the present disclosure will be described. Embodiments of the present disclosure may be modified in various forms, and the scope of the present disclosure should not be construed as being limited to the embodiments described below. These embodiments are provided to those skilled in the art to further elaborate on the present disclosure.

A hyperloop vacuum train is a train that runs inside a tube in a vacuum or sub-vacuum state, and is a next-generation transportation method currently in an early stage of development. The hyperloop vacuum train is a means of transportation capable of effectively achieving high speed and high efficiency by eliminating frictional resistance between wheels and tracks and minimizing air resistance. However, when safety of the hyperloop vacuum train is not sufficiently secured due to the nature of the hyperloop vacuum train operating at ultra-high speed, there is a risk of a major accident. In particular, not only when the vacuum tube is structurally damaged or collapsed, but also when a partial shape of the tube is deformed, a catastrophic accident may occur, and thus, a material for a tube of a hyperloop vacuum train requires more stringent safety. As a result of in-depth research, the inventors of the present invention have found that the following physical properties are important in a material for the hyperloop vacuum tube to secure the safety of the hyperloop vacuum train.

The first property required of a material for a hyperloop vacuum tube is a high-strength property. Since the hyperloop vacuum train moves through an inside of the hyperloop vacuum tube, a material for the hyperloop vacuum tube is required to have sufficient strength as a structure. In addition, since the inside of the hyperloop vacuum tube should be maintained in a vacuum or sub-vacuum state, it is necessary to have sufficient high-strength properties so that a shape of the tube is not deformed due to a pressure difference between the inside and outside.

The second property required of a material for a vacuum tube to ensure safety is vibration damping ability. In the hyperloop vacuum train, a pod with several or dozens of people on board passes through the inside of the hyperloop vacuum tube at intervals of several tens of seconds to several minutes. When a subsequent pod passes after a preceding pod has passed therethrough, vibrations may be amplified in the hyperloop vacuum tube and resonance may occur, and in serious cases, the tube may be damaged. Therefore, when a material having a vibration damping ratio of a certain level or higher is applied to the hyperloop vacuum tube, vibration in the tube after the preceding pod passes therethrough may be effectively reduced, which may contribute to effectively reducing the safety of the hyperloop vacuum train.

The third property required for a material for a hyperloop vacuum tube is low-temperature toughness. The hyperloop vacuum tube may also operate in polar regions or in deep waters. Since a steel material tends to be more easily damaged in a low-temperature or extremely low-temperature environment, when the steel material is applied to use in a hyperloop vacuum tube, it is necessary to have low-temperature toughness of a certain level or higher in order to secure safety. In particular, since the tube for a hyperloop tube train is manufactured in a form of a tube by welding, the tube is required to have excellent low-temperature toughness not only in a base material but also in a weld zone.

The inventor of the present invention has recognized that excellent yield strength, vibration damping ratio, weldability, and low-temperature toughness in a weld zone could be compatible, through in-depth research, by strictly controlling an alloy composition, content, and microstructure of the steel sheet, thereby deriving the present invention.

Hereinafter, a hot-rolled steel sheet for a tube of a hyperloop vacuum train according to an aspect of the present disclosure will be described in more detail.

According to an aspect of the present disclosure, a hot-rolled steel for a tube of a hyperloop vacuum train may include: by weight, 0.03 to 0.11% of carbon (C), 1.0 to 2.0% of silicon (Si), and 1,2 to 2.2% of manganese (Mn), and a balance of Fe and other unavoidable impurities, have a composite structure of ferrite and pearlite as a microstructure, and satisfy the following Relational Expressions 1 to 3.

[Relational Expression 1]

$$355 \leq 11 + 394*D^{(-0.5)} + 448*[C] + 94*[Si] + 69*[Mn]$$

[Relational Expression 2]

$$100 \leq 186 - 240*D^{(-0.5)} - 121*[C] - 13.2*[Si] + 13.7*[Mn]$$

[Relational Expression 3]

$$27 \leq 476 - 95.22*ln(D) - 220*[C] - 88*[Si]$$

In Relational Expressions 1 to 3, D refers to an average grain size of ferrite ($\mu$m) included in the hot-rolled steel sheet, and [C], [Si], and [Mn] refer to contents (weight %) of carbon (C), silicon (Si), and manganese (Mn) included in the hot-rolled steel sheet, respectively.

Hereinafter, a steel composition included in the hot-rolled steel sheet of the present disclosure will be described in more detail. Hereinafter, % herein representing a content of each element is based on weight unless otherwise specified.

Carbon (C): 0.03 to 0.11%

Carbon (C) is a component that greatly affects strength of a steel sheet. In the present disclosure, 0.03% or more of carbon (C) may be included in order to secure strength required for a structure. On the other hand, when a content of carbon (C) is excessive, toughness of a material may be lowered, weldability may be lowered, and a yield ratio may be increased. In addition, when the content of carbon (C) is excessive, since it may be difficult to coarsen crystal grains, in the present disclosure, an upper limit of the content of carbon (C) may be limited to be 0.11%.

Silicon (Si): 1.0 to 2.0%

Since silicon (Si) oxidizes to form a slag in a steelmaking stage, silicon (Si) tends to be removed along with oxygen. In addition, silicon (Si) is also a component that effectively contributes to improving strength of a material. Accordingly, in the present disclosure, 1.0% or more of silicon (Si) may be included for such an effect. On the other hand, when a content of silicon (Si) is excessive, peeling of surface scale may be hindered and product surface quality may be deteriorated. In addition, when the content of silicon (Si) is excessive, low-temperature toughness in a weld zone may be deteriorated by promoting formation of an M-A phase (martensite-austenite complex) in the weld zone, so in the present disclosure, the content of silicon (Si) may be limited to be 2.0% or less.

Manganese (Mn): 1.2 to 2.2%

Manganese (Mn) is a component improving strength and hardenability of steel. Therefore, in the present disclosure, 1.2% or more of manganese (Mn) may be included in order to secure such an effect. On the other hand, when a content of manganese (Mn) is excessive, material deviation may occur due to central segregation, and crack propagation resistance may be inferior. In addition, when the content of manganese (Mn) is excessive, toughness of steel may be deteriorated, so in the present disclosure, the content of manganese (Mn) may be limited to be 2.2% or less.

Other than the above-described steel composition, the hot-rolled steel sheet according to an aspect of the present disclosure may include a balance of Fe and other inevitable impurities. The inevitable impurities may be unintentionally incorporated from raw materials or surrounding environments in a general manufacturing process and cannot be completely excluded. Since these impurities may be known to a person skilled in the art, all thereof are not specifically mentioned in the present specification. In addition, additional addition of effective components other than the above-mentioned component is not completely excluded.

The hot-rolled steel sheet of the present disclosure may actively addition of titanium (Ti), niobium (Nb), and vanadium (V), and even if these components are inevitably included, a total content thereof may be limited to be 0.01% or less (including 0%). Titanium (Ti), niobium (Nb), and vanadium (V) are representative precipitation strengthening elements, which effectively contribute to improving the strength of steel by generating fine carbonitrides. However, since titanium (Ti), niobium (Nb), and vanadium (V) excessively refine a microstructure of the steel and adversely affect vibration damping performance, in the present disclosure, it is intended to actively suppress these components. In addition, titanium (Ti), niobium (Nb), and vanadium (V) are expensive components, which are not preferable from the viewpoint of economic efficiency. In the present disclosure, these components are not artificially added, and even when these components are inevitably added, a total content of these components may be actively suppressed to be less than 0.01%. A preferable total content of these components may be 0.005% or less, and a more preferable total content of these components may be 0%.

The hot-rolled steel sheet according to an aspect of the present disclosure may have a composite structure comprised of ferrite and pearlite as a microstructure. In the present disclosure, formation of a low-temperature structure such as bainite, martensite, and the like, may be actively suppressed. The low-temperature structure such as bainite, martensite, and the like, has high strength and low yield ratio, so that excellent physical properties may be exhibited as a structural material. However, since the hot-rolled steel sheet for a tube of a hyperloop vacuum train aimed for in the present disclosure is thick at a level of 10 mm or more, even when a low-temperature structure is introduced, deviation of physical properties may occur in a thickness direction of the steel sheet. This is because the low-temperature structure is formed only on a surface of the steel sheet, and it is difficult for the low-temperature structure sufficiently formed in a central portion of the steel sheet the steel sheet.

Therefore, in the present disclosure, in order to reduce deviation of physical properties, the microstructure of the steel sheet may be comprised of a composite structure formed of ferrite and pearlite, and even if the low-temperature structure such as bainite, martensite, and the like is inevitably formed, a fraction thereof may be actively suppressed by 1 area% or less (including 0 %). In terms of securing physical properties, the fraction of ferrite may be 60 to 95 area%, and the fraction of pearlite may be 5 to 40 area%.

In order to simultaneously secure the desired yield strength, vibration damping ratio, and low-temperature toughness, in the present disclosure, an average grain size of ferrite may be limited to a certain range. As the grain size thereof increases, it is advantageous to secure a vibration damping ratio, so in the present disclosure, the average grain size of ferrite may be limited to be 10 $\mu$m or more. On the other hand, when the grain size is excessively large, the strength and low-temperature toughness of the material are deteriorated, so in the present disclosure, the average grain size of ferrite may be limited to be 20 $\mu$m or less.

The inventor of the present disclosure conducted in-depth research on methods for securing the stability of materials for a tube of a hyperloop vacuum train, as a result thereof, the inventor of the present invention has recognized that yield strength, a vibration damping ratio, and low-temperature toughness in a weld zone may be simultaneously secured, when the contents of carbon (C), silicon (Si), and manganese (Mn) and the average grain size of ferrite are controlled to be within a certain range in a low alloy-based steel sheet as in the present disclosure and thus Relational Expression 1 to 3 below were derived.

[Relational expression 1]

$$355 \le 11 + 394*D^{(-0.5)} + 448*[C] + 94*[Si] + 69*[Mn]$$

[Relational expression 2]

$$100 \le 186 - 240*D^{(-0.5)} - 121*[C] - 13.2*[Si] + 13.7*[Mn]$$

[Relational expression 3]

$$27 \le 476 - 95.22*\ln(D) - 220*[C] - 88*[Si]$$

In Relational Expressions 1 to 3, D refers to an average grain size of ferrite($\mu$m) of the hot-rolled steel sheet, and [C], [Si], and [Mn] refer to contents (weight%) of carbon (C), silicon (Si), manganese (Mn) included in the hot-rolled steel sheet, respectively.

Since the hot-rolled steel sheet for a tube of a hyperloop vacuum train of the present disclosure simultaneously satisfies Relational Expressions 1 to 3, the desired yield strength, vibration damping ratio, and low-temperature toughness in the weld zone may be simultaneously secured.

The hot-rolled steel sheet for the tube of a hyperloop vacuum train of the present disclosure may have a yield strength of 350 MPa or more and a Charpy impact energy of 27 J or more at -20°C. Therefore, the hot-rolled steel sheet for the tube of a hyperloop vacuum train according to the present disclosure may secure suitable strength and low-temperature toughness as a structural material, thereby effectively securing structural safety of the tube of a hyperloop vacuum train.

The hot-rolled steel sheet for the tube of a hyperloop vacuum train of the present disclosure may have a vibration damping ratio of 100*10 $^{-6}$ or more. Here, the vibration damping ratio refers to a vibration damping ratio measured for a frequency of 1650 Hz after being impacted in a flexural vibration mode for a specimen having a length*width*thickness of 80*20*2 mm. Since the hot-rolled steel sheet for the tube of a hyperloop vacuum train of the present disclosure has a vibration damping ratio of 100*10 $^{-6}$ or more, it is possible to effectively suppress vibration amplification in a vacuum tube, and effectively prevent damage to the tube of a hyperloop vacuum train due to vibrations.

When the hot rolled steel sheet according to an aspect of the present invention is welded using submerged arc welding, the Charpy impact energy in the weld zone may be 27 J or more based on -20°C, and a fraction of an M-A phase included in the weld zone may be 5 areal or less (including 0%) . A preferable fraction of the M-A phase in the weld zone may be 3 areal or less, and a more preferable fraction of the M-A phase of the weld zone may be 1 area% or less. Here, the weld zone is located in a position 1 mm away from a fusion line, and may be interpreted to include both a weld metal zone and a heat-affected zone (HAZ).

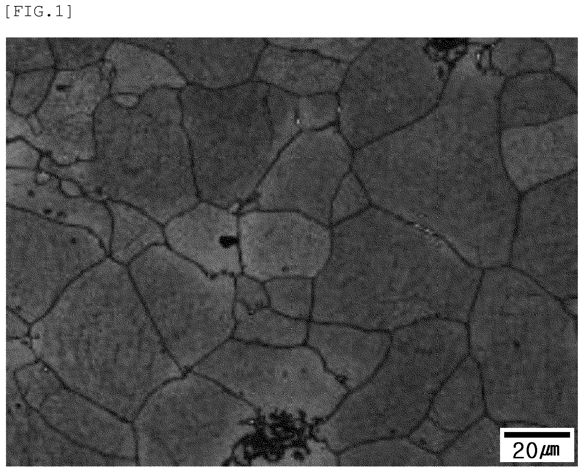

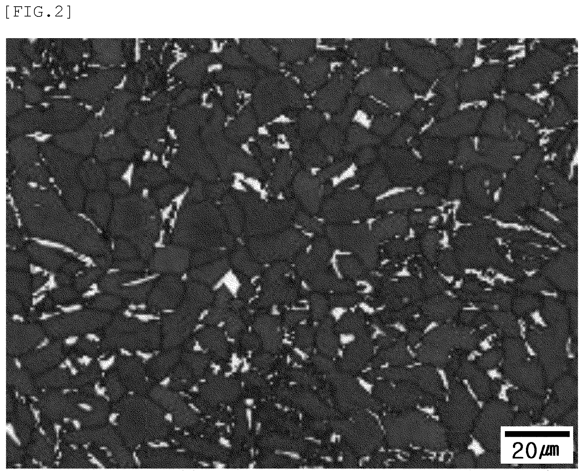

Although a welding material used for welding in the present disclosure is not particularly limited, welding is preferably performed using a welding material that does not contain silicon (Si) if possible. This is because when welding is performed using a welding material containing silicon (Si), there is a possibility that a large amount of hard M-A phase is formed in the weld zone due to excessive hardenability. FIG. 1 is a microscope image obtained by observing a weld zone formed by welding a base material including 1.5 weight! of silicon (Si) using a welding material not containing silicon (Si), and FIG. 2 is a microscope image obtained by observing a weld zone formed by welding a base material including 2.0 weight% of silicon (Si) using a welding material including silicon (Si). In FIG. 2, it can be seen that a large amount of white area (M-A phase) is observed at a grain boundary, while in FIG. 1, the M-A phase is not observed.

Therefore, according to an aspect of the present disclosure, it is possible to provide a hot-rolled steel sheet having excellent yield strength, vibration damping ratio, and low-temperature toughness in a weld zone and thus having physical properties suitable for a tube of a hyperloop vacuum train.

Hereinafter, a method for manufacturing a hot-rolled steel sheet for a tube of a hyperloop vacuum train according to an aspect of the present disclosure will be described in more detail.

According to an aspect of the present disclosure, a manufacturing method for a hot-rolled steel sheet for a tube of a hyperloop vacuum train is provided, the manufacturing method including operations: heating a slab including: by weight, 0.03 to 0.11% of carbon (C), 1.0 to 2.0% of silicon (Si), 1.2 to 2.2% of manganese (Mn), and a balance of Fe and other inevitable impurities, at a heating temperature ($T_1$) of 1100°C to 1300°C; hot rolling the heated slab at a finishing hot rolling temperature($T_2$) of 900°C to 1000°C to provide a hot-rolled steel sheet; and coiling the hot-rolled steel sheet at a coiling temperature ($T_3$) of 600°C to 700°C, wherein the finishing hot rolling temperature ($T_2$) and the coiling temperature ($T_3$) may satisfy the following Relational Expression 4.

$$10 \leq -101.9 + 0.103*[T_2] + 0.0339*[T_3] - 61.9*[C] - 109.2*[Nb] \leq 20 \qquad \text{[Relational Expression 4]}$$

In Relational Expression 4, [$T_1$], [$T_2$] and [$T_3$] refer to a slab heating temperature ($T_1$, °C), a finishing hot rolling temperature ($T_2$, °C) and a coiling temperature ($T_3$, °C), respectively, and [C] and [Nb] refer to contents (weight %) of carbon (C) and niobium (Nb) included in the hot-rolled steel sheet, respectively.

Preparing and heating steel slab

A steel slab having a predetermined alloy composition is prepared. Since the steel slab of the present disclosure has an alloy composition corresponding to the above-described hot-rolled steel sheet, a description of the alloy composition of the steel slab is replaced with the description of the alloy composition of the above-described hot-rolled steel sheet.

The prepared steel slab may be heated at a heating temperature ($T_1$) of 1100°C to 1300°C. Considering a rolling load during hot rolling, the steel slab may be heated in a temperature range of 1100°C or higher. In particular, since, in the present disclosure, a certain size or more of microstructure is intended to be introduced, a preferable heating temperature of the steel slab may be 1200°C or higher. A more preferable steel slab heating temperature may be 1250°C or higher. On the other hand, when the steel slab heating temperature is excessively high, surface quality deterioration due to scale generation may be concerned, so in the present disclosure, the steel slab heating temperature may be limited to be 1300°C or lower.

Hot rolling

The heated steel slab may be hot rolled at a finishing hot rolling temperature ($T_2$) of 900°C to 1000°C to provide a hot-rolled steel sheet. The steel sheet provided by the hot rolling of the present disclosure may have a thickness of 10 um or more.

During hot rolling, crystal grains are deformed as a material thereof is rolled, but re-crystallized soon. Through this process, a coarse and non-uniform structure becomes micronized and homogenized. The number of important process surfaces during hot rolling is a finishing hot rolling temperature (FDT), which is a temperature at the end of rolling. This is because a grain size of a final microstructure may be controlled according to the finishing hot rolling temperature. Since, in the present disclosure, a final microstructure is intended to be controlled to a level of a certain size or more, hot rolling may be performed at a finishing hot rolling temperature of 900°C or higher. A preferable finishing hot rolling temperature may be 950°C or higher. On the other hand, when the finishing hot rolling temperature is excessively high, the final microstructure may be excessively coarsely implemented, and in the present disclosure, an upper limit of the finishing hot rolling temperature may be limited to be 1000°C.

Coiling

The hot-rolled steel sheet provided by hot rolling may be coiled at a coiling temperature ($T_3$) of 600°C to 700°C after undergoing water cooling. Since, in the present disclosure, a composite structure of ferrite and pearlite is intended to be implemented as a final structure, coiling may be performed in a temperature range of 600°C or higher. Since, in the present disclosure, a certain size or more of final microstructure is intended to be implemented, it is more preferable that coiling is performed in a temperature range of 650°C or higher. However, when a coiling temperature is excessively high, a coarse microstructure may be formed or surface quality may be inferior, so, in the present disclosure, an upper limit of the coiling temperature may be limited to be 700°C.

The inventor of the present invention conducted in-depth research on technical means for controlling a grain size of a final microstructure, and in order to control the grain size of the final microstructure in a component system of the present invention, it was confirmed that a heating temperature ($T_1$) during heating of the steel slab, a finishing hot rolling temperature($T_2$) during hot rolling, and a coiling temperature ($T_3$) during coiling of the rolled steel sheet not only should be independently controlled to satisfy a certain range, but also the finishing hot rolling temperature($T_2$) and the coiling temperature ($T_3$) should be controlled within a certain range in connection with each other, so that the following Relational Expression 4 is derived.

$$10 \leq -101.9 + 0.103*[T_2] + 0.0339*[T_3] -61.9*[C] - 109.2*[Nb] \leq 20 \qquad \text{[Relational Expression 4]}$$

In Relational expression 4, $[T_1]$, $[T_2]$ and $[T_3]$ mean a slab heating temperature ($T_1$, °C), a finishing hot rolling temperature ($T_2$, °C) and a coiling temperature ($T_3$, °C), respectively, and [C] and [Nb] mean contents (weight%) of carbon (C) and niobium (Nb) included in the hot rolled steel sheet, respectively.

In a manufacturing method for a hot-rolled steel sheet for a tube of a hyperloop vacuum train according to an aspect of the present disclosure, since a slab is heated at a heating temperature ($T_1$) of 1100°C to 1300°C, and hot rolling is performed at a finishing hot rolling temperature ($T_2$) of 900°C to 1000°C, and a hot-rolled steel sheet is coiled at a coiling temperature ($T_3$) of 600°C to 700°C, as well as process conditions are controlled so that the finishing hot rolling temperature($T_2$) and the coiling temperature ($T_3$) satisfy Relational Expression 4, a microstructure of a target hot-rolled steel sheet can be effectively implemented.

The hot-rolled steel sheet manufactured by the above-described manufacturing method may satisfy the following Relational Expressions 1 to 3.

$$[Relational\ Expression\ 1]$$

$$355 \leq 11 + 394*D^{(-0.5)} + 448*[C] + 94*[Si] + 69*[Mn]$$

$$100 \leq 186 - 240*D^{(0.5)} - 121*[C] - 13.2[Si] + 13.7*[Mn] \qquad \text{[Relational Expression 2]}$$

$$[Relational\ Expression\ 3]$$

$$27 \leq 476 - 95.22*\ln(D) - 220*[C] - 88*[Si]$$

In Relational Expressions 1 to 3, D refers to an average grain size of ferrite ($\mu$m) of the hot-rolled steel sheet, and [C], [Si] and [Mn] refer to contents (weight%) of carbon (C), silicon (Si), and manganese (Mn) included in the hot-rolled steel sheet, respectively.

The hot-rolled steel sheet manufactured by the above-described manufacturing method may not only have a yield strength of 350 MPa or more and a Charpy impact energy of 27 J or more at -20°C , but also have a vibration damping ratio of $100*10^{-6}$ or more, measured for a frequency of 1650Hz in a flexural vibration mode by preparing a specimen having a length*width*thickness of 80mm *20mm *2 mm.

In addition, when the hot-rolled steel sheet manufactured by the above-described manufacturing method is welded by submerged arc welding, a Charpy impact energy in a weld zone may be 27J or more, based on -20°C, and a fraction of an M-A phase included in the weld zone may be 5 area% or less (including 0%). Here, the weld zone may refer to a position 1 mm away from a fusion line.

Therefore, according to an aspect of the present disclosure, it is possible to provide a method for manufacturing a hot-rolled steel sheet having excellent yield strength, vibration damping ratio, and low-temperature toughness in a weld zone and thus having physical properties suitable for a tube of a hyperloop vacuum train.

Mode for Invention

Hereinafter, a hot-rolled steel sheet for a tube of a hyperloop vacuum train of the present disclosure and a manufacturing method therefor will be described in more detail through specific examples. It should be noted that the following examples are only for understanding of the present invention, and are not intended to specify the scope of the present invention. The scope of the present invention may be determined by the matters described in the claims and the matters reasonably inferred therefrom.

(Example)

After preparing a steel slab having a thickness of 250 mm provided with an alloy composition of Table 1 below, a hot-rolled steel sheet having a thickness of 15 mm was manufactured by applying process conditions of Table 2. Alloy components not described in Table 1 below refer to impurities and a balance of Fe, and "-" indicates a case close to 0 wt% within an error range.

[Table 1]

| Steel type | Alloy composition (wt%) | | | | | |
|---|---|---|---|---|---|---|
| | C | Si | Mn | Ti | Nb | V |
| A | 0.07 | 1.6 | 1.7 | - | - | - |
| B | 0.07 | 2.1 | 1.5 | - | - | - |
| C | 0.07 | 0.8 | 1.7 | - | - | - |
| D | 0.07 | 1 | 1.7 | - | 0.045 | - |
| E | 0.2 | 1 | 1.2 | - | - | - |
| F | 0.07 | 1.6 | 0.8 | - | - | - |

[Table 2]

| Specimen No. | Steel type | Process conditions | | | Relational Expression 4 |
|---|---|---|---|---|---|
| | | Slab heating temperature ($T_1$, °C), | Finishing hot rolling temperature ($T_2$, °C) | Coiling temperature ($T_3$, °C) | |
| 1 | A | 1250 | 950 | 700 | 15 |
| 2 | A | 1250 | 880 | 600 | 5 |
| 3 | A | 1300 | 1000 | 750 | 22 |
| 4 | B | 1250 | 950 | 700 | 15 |
| 5 | C | 1250 | 950 | 700 | 15 |
| 6 | D | 1250 | 950 | 700 | 7 |

(continued)

| Specimen No. | Steel type | Process conditions | | | Relational Expression 4 |
|---|---|---|---|---|---|
| | | Slab heating temperature ($T_1$, °C), | Finishing hot rolling temperature ($T_2$, °C) | Coiling temperature ($T_3$, °C) | |
| 7 | E | 1250 | 950 | 700 | 7 |
| 8 | F | 1250 | 950 | 700 | 15 |

A microstructure and mechanical properties of each specimen were analyzed and described in Table 3, and whether Relational Expressions 1 to 3 of each specimen are satisfied or not was described in Table 3 together. The microstructure was measured by using an optical microscope with a magnification of 500 after etching each specimen with a nital etching method. A grain size of ferrite was measured according to ASTM E112. FIG. 1 is an image of the optical microscope used to observe the microstructure of specimen 1. The mechanical properties were measured according to KS B 0802 and KS B 0810, and the measured yield strength was described in Table 3 together.

After preparing a specimen having a length * width * thickness of 80mm * 20mm * 2mm, a vibration damping ratio was measured at room temperature using IMCE's RFDA LTV800. After being impacted in a flexural vibration mode, a vibration damping ratio in a 1650 Hz region corresponding to a 1st mode of vibration modes of the specimen was measured and analyzed, and the results thereof were described in Table 3 together.

Submerged arc welding was performed on each specimen using a welding material including by weight: 0.052% of carbon (C); 1.53% of manganese (Mn); 1.3% of nickel (Ni); 0.135% of molybdenum (Mo), and a balance of Fe and other inevitable impurities. During submerged arc welding, a heat input of 20kJ/$cm^2$ was applied to an inside and a heat input of 22kJ/$cm^2$ was applied to an outside. A Charpy impact toughness in a weld zone at 20°C was measured according to KS B 0810, and the results thereof were described in Table 3. For a region 1 mm away from a fusion line, primary etching was performed using a solution of 5 g of EDTA and 0.5 g of NaF dissolved in 100 ml of distilled water, followed by secondary etching using a solution of 25 g of NaOH and 5 g of picric acid dissolved in 100 ml of distilled water, and an M-A phase fraction was measured according to ASTM E 562.

[Table 3]

| Specimen No. | Steel type | Microstructure | Ferrite average grain size (D, μm) | Relational Expression 1 | Relational Expression 2 | Relational Expression 3 | Vibration damping ratio (*10⁻⁶) | Yield strength (MPa) | Charpy energy in weld zone (J, @-20°C) | M-A phase Fraction in weld zone (area %) |
|---|---|---|---|---|---|---|---|---|---|---|
| 1 | A | F+P | 15 | 412 | 118 | 62 | 110 | 400 | 55 | 1 |
| 2 | A | F+P | 5 | 486 | 72 | 167 | 56 | 510 | 102 | 1 |
| 3 | A | F+P | 22 | 394 | 129 | 25 | 110 | 380 | 18 | 1 |
| 4 | B | F+P | 15 | 445 | 108 | 18 | 113 | 460 | 20 | 11 |
| 5 | C | F+P | 15 | 337 | 128 | 132 | 130 | 340 | 103 | 0 |
| 6 | D | F+P | 7 | 403 | 97 | 187 | 88 | 404 | 123 | 0 |
| 7 | E | F+P | 7 | 426 | 74 | 159 | 65 | 415 | 121 | 0 |
| 8 | F | F+P | 15 | 350 | 105 | 62 | 101 | 336 | 44 | 1 |

As illustrated in Tables 1 to 3, it can be confirmed that specimens satisfying the alloy composition, process conditions, and Relational Expressions 1 to 4 of the present disclosure satisfy to have a yield strength of 350 MPa or more, a vibration damping ratio of 100*10⁻⁶ or more, and a Charpy impact energy of 27J or more, based on -20°C, while specimens not satisfying any one or more of the conditions disclosed in the present disclosure do not simultaneously secure desired physical properties.

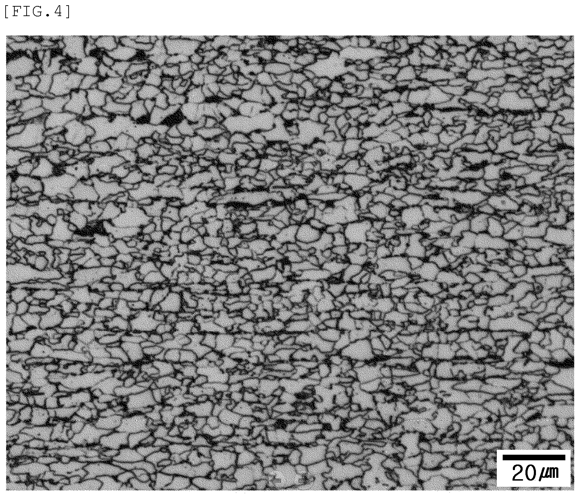

In addition, for comparison with conventional materials, a test was conducted on EN-S355, an existing structural steel material, under the same conditions. In the case of EN-S355, it could be confirmed that a vibration damping ratio measured under the same conditions was only at a level of 60*10⁻⁶. FIG. 4 is a photograph of the microstructure of EN-S355 taken using an optical microscope.

Therefore, according to an aspect of the present disclosure, a hot-rolled steel sheet having excellent yield strength, vibration damping ratio, and low-temperature toughness in the weld zone, and thus properties suitable for a tube of a hyperloop vacuum train, and a manufacturing method therefor may be provided.

Although the present disclosure has been described in detail through examples above, other types of examples are also possible. Therefore, the technical spirit and scope of the claims set forth below are not limited by the embodiments.

**Claims**

1. A hot-rolled steel sheet for a tube for a hyperloop vacuum train, comprising, by weight: 0.03 to 0.11% of carbon (C); 1.0 to 2.0 of silicon (Si); 1.2 to 2.2% of manganese (Mn), and a balance of Fe and other unavoidable impurities, having a composite structure of ferrite and pearlite as a microstructure, wherein the following Relational Expressions 1 to 3 are satisfied,

   [Relational Expression 1]

   $$355 \leq 11 + 394*D^{(-0.5)} + 448*[C] + 94*[Si] + 69*[Mn]$$

   [Relational Expression 2]

   $$100 \leq 186 - 240*D^{(-0.5)} - 121*[C] - 13.2*[Si] + 13.7*[Mn]$$

   [Relational Expression 3]

   $$27 \leq 476 - 95.22*\ln(D) - 220*[C] - 88*[Si]$$

   In Relational Expressions 1 to 3, D refers to an average grain size ($\mu$m) of ferrite included in the hot-rolled steel sheet, and [C], [Si], and [Mn] refer to contents (weight %) of carbon (C), silicon (Si), and manganese (Mn) included in the hot-rolled steel sheet, respectively.

2. The hot-rolled steel sheet for a tube for a hyperloop vacuum train of claim 1, wherein the microstructure of the hot-rolled steel sheet is comprised of ferrite of 60 to 95 area%, pearlite of 5 to 40 area%, and other unavoidable structures.

3. The hot-rolled steel sheet for a tube for a hyperloop vacuum train of claim 1, wherein total contents of titanium (Ti), niobium (Nb), and vanadium (V) inevitably included in the hot-rolled steel sheet are less than 0.01% (including 0%).

4. The hot-rolled steel sheet for a tube for a hyperloop vacuum train of claim 1, wherein the average grain size (D) of ferrite is 10 to 20 $\mu$m.

5. The hot-rolled steel sheet for a tube for a hyperloop vacuum train of claim 1, wherein a yield strength of the hot-rolled steel sheet is 350 MPa or more, a Charpy impact energy of the hot-rolled steel sheet at -20°C is 27 J or more, a vibration damping ratio measured for a frequency of 1650 Hz in a flexural vibration mode after processing the hot-rolled steel sheet into a specimen having a length * width * thickness of 80mm * 20mm * 2 mm is 100*10$^{-6}$ or more.

6. The hot-rolled steel sheet for a tube for a hyperloop vacuum train of claim 1, wherein in a weld zone formed by welding the hot-rolled steel sheet by submerged arc welding, a Charpy impact energy of the weld zone at - 20°C is 27J or more, and
   a fraction of an M-A phase included in the weld zone is 5 areal or less (including 0%).

7. The hot-rolled steel sheet for a tube for a hyperloop vacuum train of claim 1, wherein a thickness of the hot-rolled steel sheet is 10 mm or more.

8. A manufacturing method for a hot-rolled steel sheet for a tube for a hyperloop vacuum train, comprising operations of:

heating a slab including, by weight, 0.03 to 0.11% of carbon (C); 1.0 to 2.0 of silicon (Si); 1.2 to 2.2% of manganese (Mn), and a balance of Fe and other unavoidable impurities, at a heating temperature ($T_1$) of 1100°C to 1300°C;

hot rolling the heated slab at a finishing hot rolling temperature ($T_2$) of 900°C to 1000°C to provide a hot-rolled steel sheet; and

coiling the hot-rolled steel sheet at a coiling temperature ($T_3$) of 600°C to 700°C,

wherein the finishing hot rolling temperature ($T_2$) and the coiling temperature ($T_3$) satisfies the following Relational Expression 4,

$$10 \leq -101.9 + 0.103*[T_2] + 0.0339*[T_3] - 61.9*[C] - 109.2*[Nb] \leq 20 \qquad \text{[Relational Expression 4]}$$

In Relational Expression 4, $[T_1]$, $[T_2]$ and $[T_3]$ refer to a slab heating temperature ($T_1$,°C), a finishing hot rolling temperature ($T_2$,°C) and a coiling temperature ($T_3$,°C), respectively, and [C] and [Nb] refer to contents (weight %) of carbon (C) and niobium (Nb) included in the hot-rolled steel sheet, respectively.

9. The manufacturing method for a hot-rolled steel sheet for a tube for a hyperloop vacuum train of claim 8, wherein total contents of titanium (Ti), niobium (Nb) and vanadium (V) inevitably included in the slab are less than 0.01% (including 0%).

[FIG.1]

[FIG.2]

[FIG.3]

[FIG.4]

## INTERNATIONAL SEARCH REPORT

| International application No. |
| --- |
| **PCT/KR2022/012878** |

| A. | CLASSIFICATION OF SUBJECT MATTER |
| --- | --- |

**C22C 38/04**(2006.01)i; **C22C 38/02**(2006.01)i; **C22C 38/14**(2006.01)i; **C22C 38/12**(2006.01)i; **C21D 8/02**(2006.01)i; **B21C 47/02**(2006.01)i

According to International Patent Classification (IPC) or to both national classification and IPC

| B. | FIELDS SEARCHED |
| --- | --- |

Minimum documentation searched (classification system followed by classification symbols)

C22C 38/04(2006.01); B21B 1/26(2006.01); B21B 3/00(2006.01); C21D 8/02(2006.01); C22C 38/00(2006.01); C22C 38/06(2006.01); C22C 38/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel), 튜브(tube), 페라이트(ferrite), 펄라이트(pearlite), 결정립(grain)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2006-124773 A (SUMITOMO METAL IND., LTD.) 18 May 2006 (2006-05-18) See paragraphs [0038]-[0040] and [0043], claims 1-2 and table 3. | 1-9 |
| A | JP 2007-291511 A (JFE STEEL K.K.) 08 November 2007 (2007-11-08) See paragraphs [0040]-[0043] and claims 1-5. | 1-9 |
| A | CN 105658830 A (KOBE STEEL LTD.) 08 June 2016 (2016-06-08) See claims 1-3. | 1-9 |
| A | JP 2016-047956 A (JFE STEEL CORP.) 07 April 2016 (2016-04-07) See paragraphs [0045]-[0052] and claims 1-3. | 1-9 |
| A | KR 10-1485237 B1 (JFE STEEL CORPORATION) 22 January 2015 (2015-01-22) See claims 1-2 and 7-9. | 1-9 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 November 2022** | **30 November 2022** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012878**

| Patent document cited in search report | | | Publication date (day/month/year) | Patent family member(s) | | | Publication date (day/month/year) |
|---|---|---|---|---|---|---|---|
| JP | 2006-124773 | A | 18 May 2006 | JP | 4438600 | B2 | 24 March 2010 |
| JP | 2007-291511 | A | 08 November 2007 | None | | | |
| CN | 105658830 | A | 08 June 2016 | CN | 105658830 | B | 11 August 2017 |
| | | | | DE | 112014004834 | T5 | 07 July 2016 |
| | | | | JP | 2015-081367 | A | 27 April 2015 |
| | | | | JP | 6143355 | B2 | 07 June 2017 |
| | | | | MX | 2016005086 | A | 03 August 2016 |
| | | | | US | 2016-0265078 | A1 | 15 September 2016 |
| | | | | WO | 2015-060311 | A1 | 30 April 2015 |
| JP | 2016-047956 | A | 07 April 2016 | JP | 6197767 | B2 | 20 September 2017 |
| KR | 10-1485237 | B1 | 22 January 2015 | CN | 102971443 | A | 13 March 2013 |
| | | | | CN | 102971443 | B | 25 March 2015 |
| | | | | EP | 2589678 | A1 | 08 May 2013 |
| | | | | EP | 2589678 | B1 | 05 September 2018 |
| | | | | JP | 2012-012623 | A | 19 January 2012 |
| | | | | JP | 5018934 | B2 | 05 September 2012 |
| | | | | KR | 10-2013-0021409 | A | 05 March 2013 |
| | | | | TW | 201207126 | A | 16 February 2012 |
| | | | | TW | I431124 | B | 21 March 2014 |
| | | | | US | 2013-0233453 | A1 | 12 September 2013 |
| | | | | WO | 2012-002566 | A1 | 05 January 2012 |

Form PCT/ISA/210 (patent family annex) (July 2022)

**EP 4 397 780 A1**

**Patent documents cited in the description**

- KR 102106353
- KR 20200504